# EUROPEAN PATENT SPECIFICATION

(11) **EP 1 943 010 B1**
(45) Date of publication and mention of the grant of the patent: **19.01.2011**
(21) Application number: 06803070.9
(22) Date of filing: 07.09.2006
(51) Int. Cl.: B01F 3/10, B01F 7/24, B01F 15/00, B29B 7/40, B29B 7/42, B29B 7/74

(54) **DYNAMIC HELICAL MIXER AND MIXING APPARATUS USING SAME AND METHODS OF MIXING**
DYNAMISCHER SCHNECKENMISCHER UND DIESEN VERWENDENDE MISCHVORRICHTUNG UND MISCHVERFAHREN
MÉLANGEUR HÉLICOÏDAL DYNAMIQUE ET APPAREIL DE MÉLANGE ASSOCIÉ UND PROCÉDÉS DE MÉLANGE

(30) Priority: 13.09.2005 US 716773 P
(43) Date of publication of application: 16.07.2008
(73) Proprietor: BAYONE URETHANE SYSTEMS, LLC, St. Louis MO 63103 (US)
(72) Inventor: BIEN, Frank, Apopka, FL 32712 (US); HOLESCHOVSKY, Ulrich, Pittsburgh, PA 15228 (US); WALLACE, Stephen, Cartersville, GA 30121 (US); ROBINSON, Michael, Rocky Face, GA 30740 (US)
(74) Representative: Winter, Brandl, Fürniss, Hübner, Röss, Kaiser, Polte - Partnerschaft
(86) International application number: PCT/US2006/034762
(87) International publication number: WO 2007/032982

(56) References cited:
- GB-A- 1 313 680
- GB-A- 1 384 467
- US-A- 3 953 006

## Description

### FIELD OF THE INVENTION

This invention concerns a mixer that has helical mixing elements that can mix ingredients of drastically different viscosities.

### BACKGROUND OF THE INVENTION

Any mixing of two different materials requires care to assure that the amount of mixing desired is achieved. Materials can be different in composition, density, viscosity, and other factors.

Mixing two different materials that are reactive with each other complicates the mixing process, because the mechanics of mixing can create conditions in which a reaction between the two materials can occur prematurely or unintentionally.

Two-component systems are known in polymer chemistry as two different materials which are reactive after being mixed together. The timing and manner of mixing involves a delicate combination of parameters to assure adequate mixing of the two components but little or no reaction until the components, suitably mixed, have been dispensed from the mixing apparatus.

Static helical mixers are known for mixing a foamed, two-component system. See, for example, U.S. Pat. No. 5,893,486 (Wasmire) or U.S. Pat. No. 5,480,589 (Belser et al.). Unfortunately, the two components only encounter a static, i.e., fixed, helical mixer, which is considered insufficient for commercial purposes because materials of two different viscosities travel at different rates and paths.

Dynamic mixers are also known for mixing a two-component system. See, for example, U.S. Pat. No. 4,778,631 (Cobbs, Jr. et al.) and U.S. Pat. No. 6,443,612 (Keller). Unfortunately, the dynamic mixer does not contain helical mixing elements, thereby making this device insufficient for commercial purposes because of dwell time in mixing chambers, the helical mixer pushes materials from chamber quickly.

Dynamic helical mixing elements are known, but not for use in high pressure mixing of two-component systems. The Decker D Series line of low pressure mixers is discussed at www.liquidcontrol.com. A low pressure urethane mixing head is also identified at www.edge-sweets.com.
GB-A-1384467 describes a mixing device in accordance with the preamble of claim 1 and a method in accordance with the preamble of claims 6 and 8 for mixing together tow or more liquids comprising a housing, a rotor mounted in the housing for rotation about a longitudinal axis, a liquid inlet and a liquid outlet.
GB-A-1313680 relates to a mixing apparatus comprising a mixing head having a hydraulic motor, a mixer powered from the hydraulic motor within a mixing chamber to mix fluids of different viscosities, wherein the mixing head further comprises a shaft connecting the hydraulic motor and the mixer and two bearings to stabilize rotation of the shaft.
US-A-3953006 discloses a portable, hand held conversion and dispensing apparatus for mixing polymeric compositions, comprising an elongated housing, a hollow rotatable screw, a drive shaft, at least one mixing blade positioned in line with and adjacent to the end of the screw and a dispensing nozzle.

### SUMMARY OF THE INVENTION

What the art needs, and has needed for a considerable period of time, is a dynamic mixer for a mixing apparatus for a two-component system designed to operate at high pressure, high shear conditions, such that a two-component system can be intimately mixed and highly sheared in a delivery head during a quick residence time. Also, the art needs a portable mixing head to deliver the two-component system to any location remote from the powered pumps that deliver the two different components to the mixing head.

The present invention solves this long-standing problem by providing a portable mixing head assembly according to claim 1 containing a dynamic mixer with helical mixing elements and a hydraulic motor to power the dynamic helical mixer.

Moreover, this invention concerns a mixer that combines a high shear helical mixing element with very small hold-up volume in the mix head and a unique delivery system to provide highly efficient mixing not attainable with any other device. An apparatus built according to this invention allows to process two or more component reactive systems that have drastically different viscosities and ratios.

Stated another way, the apparatus of the present invention has combined the benefits of a high shear mixing head into a mixing apparatus for materials that require very short residence times and high pressure mixing.

One aspect of the present invention is a mixing apparatus comprising a mixing head having a hydraulic motor and a substantially cylindrical mixer having helical mixing elements extending therefrom, wherein the substantially cylindrical mixer is configured to rotate under power from the hydraulic motor within a mixing chamber to mix and propel fluids of two different viscosities moving the mixing chamber.

Another aspect of the present invention is a mixing apparatus comprising the dynamic mixer described immediately above as used in a high shear, high pressure mixing environment that utilizes hydraulic deliver of power to the dynamic mixer.

Another aspect of the present invention is a method of using the mixing apparatus described immediately above to mix two fluids having different viscosities moving through the mixing apparatus designed for high pressure mixing with low residence times.

Another aspect of the present invention is a method of making a composite from two fluids having different viscosities moving through the mixing apparatus described above.

Features and advantages will become apparent when considering embodiments of the invention in view of the following drawings.

### BRIEF DESCRIPTION OF THE DRAWINGS

Fig. 1 is a depiction of one embodiment of a mixing apparatus of the present invention.

Fig. 2 is a perspective view of one embodiment of a dynamic mixer of the present invention.

Fig. 3 is a side plan view of the mixer of Fig. 2.

Fig. 4 is a cross-sectional view of the mixer of Fig. 3 along line A-A.

Fig. 5 is a plan view of the head assembly of one embodiment of the present invention.

### EMBODIMENTS OF THE INVENTION

Mixing Apparatus

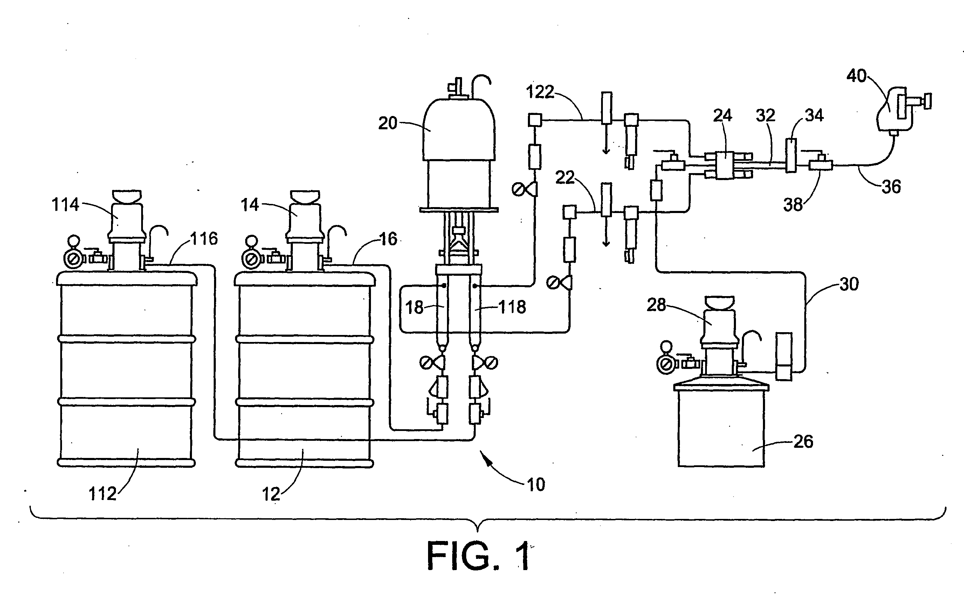

A mixing apparatus useful in the present invention is a dispensing system as seen in Fig. 1. Dispensing systems suitable for use in the present invention are commercially available from Polymer Processing Co. of Apopka, Florida, USA. Presently useful is the Vader brand dispensing system that has a maximum output of 9.5 ℓ/min (2.5 gallons/minute), a maximum pressure of 20.7 MPa (3000 pounds/in²), a range of acceptable viscosities of 200-2500 centipoise, and an air consumption of 1.4 m³/min (50 SCFM) at 0.6 MPa (90 pounds/in²), with two positive displacement pumps. Other dispensing systems are commercially available from Polymer Processing Co. on a customized order basis.

Normally, the Vader brand dispensing system is designed to use an impingement mixer element for high pressure mixing. This invention has replaced that impingement mixer element with a mixer element and hydraulic motor described below to achieve both high shear and high pressure mixing in a chamber and using a short residence time.

As configured according to the invention, a dispensing system is designed to dispense a mixture of two different materials of the same viscosity, the same materials with different viscosities, or two different materials of two different viscosities. Two-component polymer systems, such as polyurethanes, are two different materials of two different viscosities being mixed at a very rapid throughput, i.e., a very short residence time within the mixing chamber due to the high reactivity of the two components.

"Different viscosities" means any discernible difference in viscosities between the two materials such that the mixing apparatus is desired to mix the two materials. Preferably, the viscosity of the second material is at least twice the viscosity of first material. Most preferably, the viscosity of the second material is at least one order of magnitude the viscosity of the first material. For example, in polyurethane chemistry, one material, a polyurethane-based resin has a viscosity of about 10,000, whereas the second material has a viscosity of about 250. At the very extremes of performance, one material can have a viscosity of up to 1,500,000 centipoise while the second material can have a viscosity of less than 100 centipoise.

Ratios of one material to the second material of different viscosities can range from about 1:1 to about 3000:1. Preferably the ratios can range from about 1:1 to about 100:1, and most preferably from about 1:1 to about 10:1 for two-component foamed polyurethane systems.

Output of the mixing apparatus can range from about 2.3 kg/min (5 lbs. per minute) to about 136 kg/min (300 lbs. per min). Preferably the output can range from about 4.5 (10) to about 68.1 (150), and preferably from about 6.8 (15) to about 27 kg/min (60 lbs. per min).

Pressure of the mixing apparatus can range from about (300) to about 20.7 MPa (3000 lbs. per square inch (psi)). Preferably the pressure output can range from about 2.8 (400) to about 13.8 (2000), and preferably from about 3.4 (500) to about 10.3 MPa (1500 psi).

Air consumption of the mixing apparatus can range from about 0.17 (6) to about 0.28 m³/min (10 cubic feet per min (cfm)).

Fig. 1 depicts, at its essential level, dispensing system 10 that begins with two reservoirs. Reservoir 12 contains one component, for example, polyurethane resin. Reservoir 112 contains the second component, for example, an isocyanate to react with the polyurethane resin.

Both components are extracted from reservoirs 12 and 112 using pumps 14 and 114, respectively, into lines 16 and 116, respectively. These lines enter chambers 18 and 118, respectively, against which a proportioning pump 20 acts to dispense each component according to a pre-set ratio. The ratio of components exit chambers 18 and 118 via lines 22 and 122, respectively, and enter a mixer manifold 24. Optionally also entering mixer manifold is a third material, for example a solvent, from reservoir 26 forced by pump 28 through line 30.

Dispensing system 10 to this point in the description is a conventional mixing apparatus and includes a variety of valves, filters, gauges, and the like known to those skilled in the art for controlling and monitoring the movement of the fluid from reservoirs 12 and 112 to manifold 24.

Connected to an outlet of manifold 24 is a chamber 32 in which a dynamic mixer resides. The dynamic mixer will be described in greater detail in the next section. At the outlet of chamber 32 is, in series, a fluid regulator 34, a fluid line 36 with a shutoff valve 38 and a dispenser valve 40.

The dispensing system 10 thusfar described is not unconventional for the dispensing of a two-component mixture. Non-limiting examples of two-component mixtures include adhesives, foams, sealants, coatings, and the like.

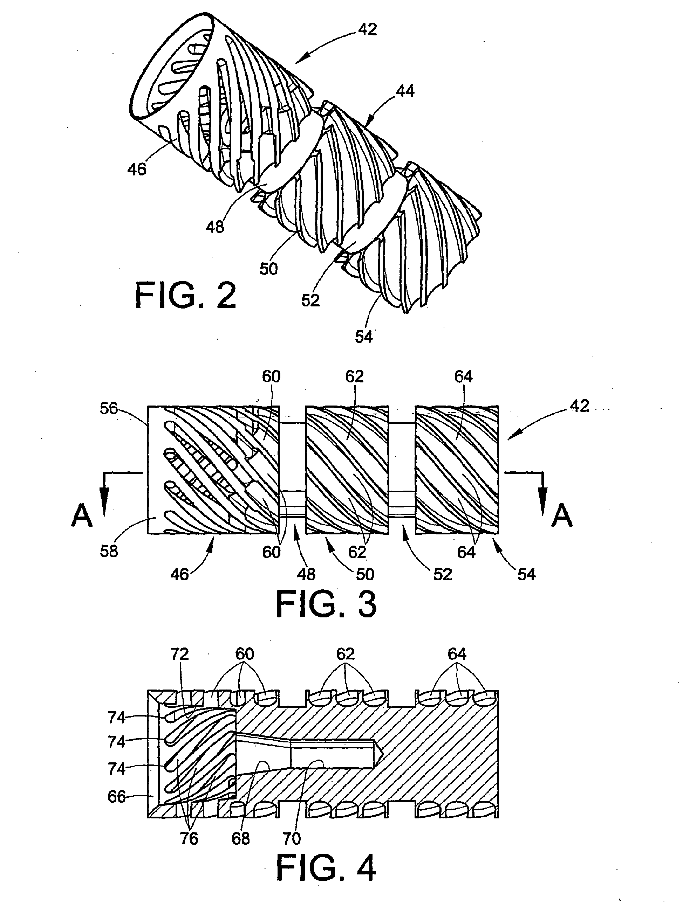

Fig. 2 is a perspective view of one embodiment of a dynamic mixer 42 of the present invention. The mixer 42 has helical elements, generally 44, on the outer circumference of the mixer on at least a portion of the length of the mixer. Helical elements 44 can be viewed as elevated ridges above a common surface or depressed grooves below a common surface. In this discussion, the helical elements 44 are grooves into the outer circumference of the mixer 42, such that references to the outer diameter of the mixer 42 have subtracted therefrom the depth of the grooves comprising helical elements 44.

Helical elements 44 can rotate clockwise or counter-clockwise when viewed along an axis of mixer 42 from the upstream direction toward the downstream direction. Preferably, the helical elements 44 rotate counterclockwise to push.

Mixer 42 has an outer diameter less than the inner diameter of chamber 32. The amount of clearance of mixer 42 within chamber 32 can range from about 0.064 (0.025) to about 0.318 (0.125), and preferably from about 0.064 (0.025) to about 0.191 cm (0.075 inches).

Mixer 42 has a length ranging from about 3 to about 15 inches, and preferably from about 25.4 (10) to about 30.5 cm (12 inches)

Mixer 42 has a pitch, defining the number of rotations of helical elements 44 along the length of mixer 42, ranging from about 12.7 (5) to about 36.8 cm (15 inches), and preferably from about 25.4 (10) to about 38.5 cm (12 inches).

The embodiment of mixer 42 shown in Fig. 2 has a 4.00 x 3.75 pitch. Mixer 42 has a total of five different segments, 46, 48, 50, 52, and 54, which are useful for providing different mechanics of mixing as the two components in manifold 24 pass through chamber 32 under pressure. Segment 46 has helical elements 48. Segment 48 does not. Segment 50 has helical elements 48. Segment 52 does not. Segment 54 has helical elements. Thus, in this embodiment, the two components exiting manifold in their proper ratio encounter five different sections of mechanical action within chamber 32.

While Figs. 2-4 show one embodiment of a dynamic helical mixer of the present invention, it is to be understood that a variety of mixing configurations on mixer 42 can be used within the scope of the present invention. Without undue experimentation, one skilled in the art can configure sections of helical elements and no helical elements, or sections of helical elements of different depths and radii, or any combination of them, in order to optimize the intimate mixing of two materials of different viscosities, the same materials of two different viscosities, or two different materials of the same viscosities for dispensing from valve 40. As can be seen in Figs. 2-4, the helix is designed to push material and the cutouts serve as internal "mix chambers" where material is mixed and grabbed by the helix and thrusted out of the conical space.

In a preferred embodiment, using the dynamic mixer 42 having segments 46, 48, 50, 52, and 54, one can dispense a two or more component polyurethane system at the rate of up to 200 lbs. per minute to either fill molds or apply material continuously on a substrate. Such a reactive urethane system may contain blowing agents to produce a foamed polyurethane. Examples of such formulations are well known to the art and can be found in publications such as "Flexible Polyurethanes Foams" by Ron Herrington and Kathy Hook, 2nd edition 1997, Dow Chemical Company and incorporated herein by reference.

Fig. 3 shows a more detailed plan view of the mixer 42 of Fig. 2. Fig. 4 is a cross-sectional view of Fig. 3 along lines A - A.

Segment 46 has a length of from about 1.27 (0.50) to about 5.1 cm (2 inches), and preferably from about 2.5 (1) to about 3.8 cm (1.5 inches)

Segment 48 has a length of from about 0.64 (0.25) to about 2.5 cm (1 inches), and preferably from about 0.762 (0.300) to about 1.016 cm (0.400 inches).

Segment 50 has a length of from about 1.27 (0.50) to about 5.1 cm (2 inches), and preferably from about 0.405 (0.750) to about 3.8 cm (1.5 inches).

Segment 52 has a length of from about 0.64 (0.25) to about 2.5 cm (1 inches), and preferably from about 0.762 (0.300) to about 1.016 cm (0.400 inches).

Segment 54 has a length of from about 1.3 (0.5) to about 5.1 cm (2 inches) and preferably from about 0.405 (0.750) to about 3.8 cm (1.5 inches)

Segments 46, 50, and 54 of mixer 42 have an outer diameter of from about 2.5 (1) to about 15.2 cm (6 inches), and preferably from about 2.5 (1) to about 5.1 cm (2 inches).

Segments 48 and 52 of mixer 42 have an outer diameter of from about 1.3 (0.5) to about 7.6 cm (3 inches), and preferably from about 1.91 (0.75) to about 3.8 cm (1.5 inches).

Segment 46 has a length ranging from about 1.3 (0.5) to about 5.1 cm (2 inches), and preferably from about 2.5 (1) to about 3.8 cm (1.5 inches). At the upstream end 56 of segment 46, there is a circumferential surface 58 that does not contain any helical elements 44, allowing the two components to enter chamber 32 before mixing begins. The circumference surface 58 has a length ranging from about 0.381 (0.150) to about 1.91 cm (0.750 inches), and preferably from about 0.475 (0.187) to about 0.635 cm (0.250 inches).

After circumferential surface 58, grooves 60 begin, forming helical elements in segment 46. Grooves 60 are helical in longitudinal in direction and have a radius ranging from about 0.15 (0.06) to about 0.64 cm (0.25 inches). Most preferably, the radius is about 0.157 cm (0.062 inches). Grooves are spaced apart in a range from about 0.051 (0.020) to about 0.254 cm (0.100 inches), and preferably from about 0.127 (0.050) to about 0.191 cm (0.075 inches) such that there are about 12 grooves on segment 46. The depth of grooves 60 range from about 0.254 (0.100) to about 0.635 cm (0.250 inches), and preferably from about 0.318 (0.125) to about 0.381 cm (0.150 inches).

Segment 48 has no grooves but its outer diameter is relatively the same amount as the diameter of segment 46 at the full depth of grooves 60. Fig. 4 has a cross-sectional view of this relative difference in diameters between segment 46 within grooves 60 and segment 48.

Segment 50 has grooves 62 that commence contiguous to segment 48. As seen in Fig. 4, at the full depth of grooves 62, the diameter of segment 50 is relatively the same as the diameter of segment 48, allowing flow of the materials being mixed from segment 48 into grooves 62 of segment 50. Grooves 62 are helical in longitudinal direction and have a radius ranging from about 0.127 (0.050) to about 0.318 (0.125), and preferably from about 0.157 (0.062) to about 0.254 cm (0.100 inches). Most preferably, the radius is about 0.241 cm (0.095 inches) Grooves 62 are spaced apart in a range from about 0.064 (0.025) to about 0.254 cm (0.100), and preferably from about 0.114 (0.045) to about 0.165 cm (0.065 inches), such that there are about 10 grooves on segment 50. The depth of grooves 62 range from about 0.254 (0.100) to about 0.635 (0.250), and preferably from about 0.318 (0.125) to about 0.381 cm (0.150 inches).

Segment 52 has no grooves but its outer diameter is relatively the same amount as the diameter of segment 50 at the full depth of grooves 62. Fig. 4 has a cross-sectional view of this relative difference in diameters between segment 50 within grooves 62 and segment 52.

Segment 54 has grooves 64 that commence contiguous to segment 52. As seen in Fig. 4, at the full depth of grooves 64, the diameter of segment 54 is relatively the same as the diameter of segment 52, allowing flow of the materials being mixed from segment 52 into grooves 64 of segment 54. Grooves 64 are helical in longitudinal direction and have a radius ranging from about 0.127 (0.050) to about 0.318 cm (0.125 inches), and preferably from about 0.157 (0.062) to about 254 cm (0.100 inches). Most preferably, the radius is about 0.241 cm (0.095 inches). Grooves 64 are spaced apart in a range from about 0.064 (0.025) to about 0.254 (0.100), and preferably from about 0.114 (0.045) to about 0.165 cm (0.065 inches), such that there are about 10 grooves on segment 50. The depth of grooves 64 range from about 0.254 (0.100) to about 0.635 (0.250), and preferably from about 0.318 (0.125) to about 0.381 cm (0.150 inches).

Referring now to Fig. 4, the interior of mixer 42 is described. Segment 46 has two different frustroconical surfaces forming from an opening 66 at end 56 of segment 46.

The first frustroconical surface 68 extends along the entire length of segment 46 connecting to a cylindrical surface 70 within segment 50. The transition from frustroconical surface 68 to cylindrical surface 70 occurs within segment 48. The angle of frustroconical surface 68 ranges from about 2° to about 10°, and preferably about 8 degrees.

The second frustroconical surface 72 extends from opening 66 to approximately 70 percent of the length of segment 46. The angle of frustroconical surface 72 ranges from about 2° to about 10°, and preferably about 5 degrees.

Within the second frustroconical surface 72 are helical elements 74 rotating in the same direction as helical elements 44. Helical elements 74 take the form of grooves 76 that have a depth that penetrates through to the surface of grooves 60 on segment 46. Helical elements 74 in this embodiment rotate clockwise when viewed from opening 66. Grooves 76 have a continuation of the same pitch as grooves 60 and have a radius ranging from about 0.051 (0.020) to about 0.191 cm (0.075 inches) and preferably from about 0.064 (0.025) to about 0.089 cm (0.035 inches).

Thus there is through communication of grooves 76 with grooves 60 such that material being mixed can flow through from opening 66 to grooves 76 to grooves 60, all within segment 46 and proceed to segment 48. The combination of surfaces 68, 70, and 72 form an interior space or a "basket" within which the material is gathered before being thrust via centripetal force through grooves 76 and 60 to the exterior surfaces of the mixer 42.

Approximately 65 percent of length of segment 46 has openings caused by the intersection of grooves 76 with grooves 60.

Mixer 42 rotates in chamber 32 by the pressurized flow of the fluid materials through and along the mixer 42 within chamber 32 powered by hydraulic or electric motor. The rotation of mixer 42 in chamber 32 can range from about 200 rpm to about 5000 rpm, and preferably from about 2000 to about 4000, according to the variable speed desired for complete mixing of two materials having different viscosities.

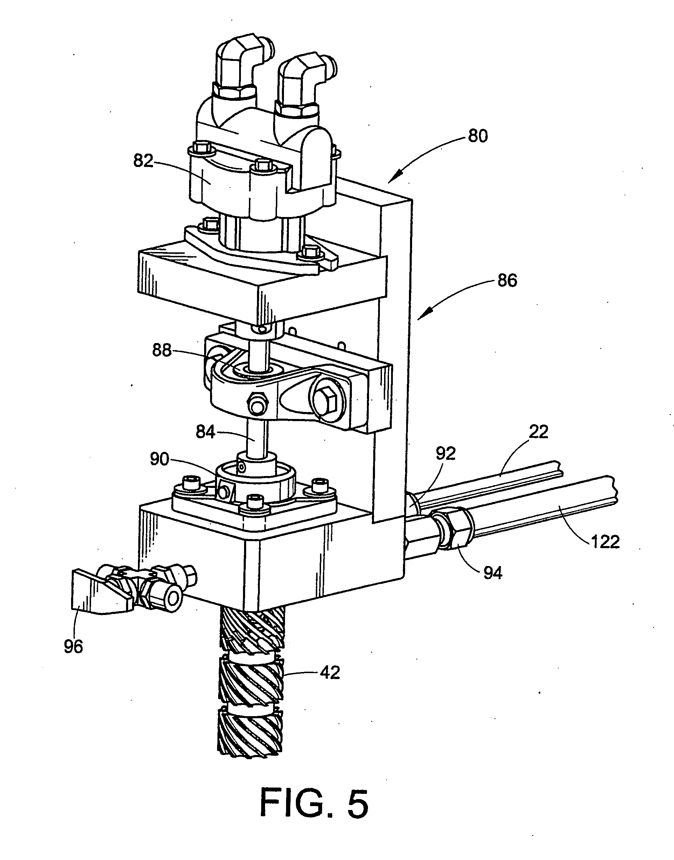

Fig. 5 is a plan view showing the head assembly 80 of one embodiment of the invention that includes mixer 42 as seen in Figs. 2-4. As explained above, mixer 42 is rotated using a variable speed mixer hydraulic motor, 82 in Fig. 5, that is connected to mixer 42 by a shaft 84 rotating within a frame (generally 86) that also contains bearing 88 and 90. In fluid communication with lines 22 and 122 are check valves 92 and 94, respectively. Material of two different viscosities travels through lines 22 and 122, through check valves 92 and 94 and into the "basket" formed by surfaces 68, 70, and 72. A flush valve 96 is also within fluid communication of the material flow, for cleaning purposes.

The hydraulic motor 82 is connected to a hydraulic pump (not shown). There are several advantages to using a hydraulic motor in head assembly of this invention. First of all, a hydraulic motor maintains revolutions per minute under increased force of mixing within mixer 42 caused by high shear mixing of materials of different viscosities, sometimes in order of magnitude of difference. An electric motor at the location of motor 82 would lose revolutions per minute under the force of mixing, resulting in a loss of efficient mixing. Increasing pressure causes an electric motor to work less efficiently.

Secondly, a hydraulic motor is much lighter in weight and has less mass. This permits the head assembly 80 to be quite portable and manageable by an individual or machine moving the head assembly at the time of delivery of the thoroughly mixed fluid from dispenser valve 40. Stated another way, the hydraulic motor consistently transfers power to mixer 42 with less bulk or weight than an electric motor of the same power level.

Thirdly, a hydraulic motor removes the possibility of electrical sparks from the area where the fluid is being dispensed from valve 40. The hydraulic pump apparatus is quite distant from valve 40, permitting the mixer 42 to operate in volatile space where an electrical component would add danger.

Because the transfer of power from the motor 82 to mixer 42 is quite important, two bearings 88 and 90 are provided to control rotation of shaft 84. Moreover, the bearings 88 and 90 are arranged on frame 86 such that their respective anchorage is arranged in an orthogonal relationship. Rather than have two bearings both anchored to the frame 86 in the plane parallel the axis of the shaft 86, bearing 90 is anchored to a portion of frame 86 that is in a plane transverse to the axis of shaft 86.

Each of motor 82, shaft 84, frame 86, bearing 88, and bearing 90 contribute to a portable, lighter weight, non-electric head assembly 80.

Referring again to Fig. 4, the opposing rotation of helical elements 74 and helical elements 44 establish a turbulence within the two materials being mixed from manifold 24 such that intimate mixing occurs for the materials of different viscosities or the two different materials.

The advantages of a dynamic, rotating mixer 42 with helical elements 44 and 74 over a static mixer of a conventional dispensing system can be listed as follows: short residence time, variable speed to match variety of materials and through put, shearing of materials to cut and mix.

Materials

As explained previously, materials that can benefit from mixer 42 and mixing apparatus 10 of the present invention are quite numerous and readily known to those skilled in the art. The materials can range from polymers, polymer precursors, slurries, highly filled materials, to foodstuffs to fluids (both liquids and gases) within the scope of the present invention. Materials blended may be inert or reactive.

Reactive polymers or polymer precursors are commonly mixed in a dispensing system 10 especially if the materials are highly reactive with one another. Generally, an apparatus according to this invention can be used to mix reactive fluid systems that become solid upon curing. The curing substantially takes place after the mixed materials have exited the mixing apparatus and generally results in a solid, flexible or rigid product that may also be foamed if blowing agents have been used. Mixing apparatus 10 can be used in a continuous process when applied to a moving substrate or may be used discontinuously when used to fill molds or other set-ups that otherwise require intermittent operation

This invention can also be used to process thermoplastic polymers. Thermoplastic polymers are generally those polymers which can be molded, extruded, cast, or otherwise shaped and reprocessed at temperatures at least as great as their softening or melting point. Any suitable thermoplastic polymer is used as one of the materials being mixed in the apparatus 10 of the present invention.

For example, polyurethanes, polyolefins, polyamides, polyethers, polyvinyls (such as plastisols) and polyesters form suitable thermoplastic or thermoset polymers in certain embodiments of the invention. Examples of these materials include two-component polyurethanes (PU), nylon 6, nylon 66, polyphenylene ether (PPE), polyethylene terephthalate (PET), polybutylene terephthalate (PBT), and polypropylene (PP), all of which are commercially available from a number of sources well known to those of skill in the art. Two-component polyurethanes are available from BayOne Urethane Systems, LLC of St. Louis, MO, USA.

Optional Additives

The materials benefiting from the present invention can include conventional plastics additives in an amount that is sufficient to obtain a desired processing or performance property for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.williamandrew.com), can select from many different types of additives for inclusion into the compounds of the present invention.

Non-limiting examples of optional additives include adhesion promoters; biocides (antibacterials, fungicides, and mildewcides), anti-fogging agents; anti-static agents; bonding, blowing and foaming agents; dispersants; fillers and extenders; fire and flame retardants and smoke suppresants; impact modifiers; initiators; lubricants; micas; pigments, colorants and dyes; plasticizers; processing aids; release agents; silanes, titanates and zirconates; slip and anti-blocking agents; stabilizers; stearates; ultraviolet light absorbers; viscosity regulators; waxes; and combinations of them.

An apparatus according to this invention can be used to particular great advantage for processing urethane systems. Typically, these reactive systems have two components, one containing an isocyanate and the other containing isocyanate reactive components, such as polyols, amines, chain extenders, crosslinkers, water and others. The apparatus 10 is especially useful for polyurethane systems that are highly reactive because the mixing action of the apparatus is so effective that residence times for the ingredients being mixed need only be as short a period of time as less than one second. Thus, apparatus 10 can mix even the most highly reactive ingredients effectively and dispense the combination before reaction occurs.

There are other ingredients that are necessary to make a useful product such as catalysts, blowing agents, surfactants, pigments, dyes, fillers and others. In most cases, these components are added to the isocyanate reactive component. In some cases, components such as catalysts or pigments may be added in separate streams.

A multitude of suitable ingredients exist and are well known to the art. A more detailed discussion of suitable polyols, isocyanates, catalysts, inhibitors, cross-linkers, chain extenders, surfactants, blowing agents, additives for flame retardance, fillers, anti-aging agents, mold release agents, biocide addition agents and other special additives can be found in the "Polyurethane Handbook" by Guenter Oertel, 2nd edition, Hanser 1993.

Examples of suitable isocyanates are toluene diisocyanate (TDI) and methylene diphenylene diisocyanate (MDI), and their mixtures. MDI need not be used in the form of the pure or nearly pure 4,4' isomer. Modified isocyanates such as urethane- and carbodiimide-modified isocyanates, may be used. Polymeric and crude containing tri- and higher functionality isocyanates may be used as well. Isocyanate-terminated prepolymers and quasi prepolymers may be used as well. In addition to pure isocyanates, isocyanate-terminated prepolymers and mixtures thereof may be used.

Mixing of the Materials

The pace of reaction of the two different materials, if any, establishes parameters of mixing. In a two-component polyurethane system, where the two materials are an isocyanate reactive resin and an isocyanate, substantial reaction can start occur in a time from about 2 sec. to about 5 min., and preferably from about 8 to 30 seconds.

Therefore the residence time of the two components of a polyurethane system from manifold 24 to dispenser valve 40 must be less than the onset of the reaction.

The mixer 42 therefore is vital to the intimate mixing of the two components of a polyurethane system to achieve appropriate conditions for desired reaction after leaving dispensing valve 40 but not cause a reaction to commence in chamber 32, regulator 34, line 36, or dispenser valve 40.

As presently configured with mixer 42 as shown in Figs. 2-4 using a Vader brand dispensing system 10 from Polymer Processing Company, residence times of the two components of the urethane system in contact with each other is a very short time indeed, ranging from about 1 to about 20 seconds, and preferably from about 2 to about 5 seconds.

Usefulness of the Invention

Any mixing of two different materials requires care to assure that sufficient and thorough mixing is achieved. Materials can be different in composition, density, viscosity, and other factors. The degree of difficulty depends on the relative flow rates and viscosity differences. For example, the most easily mixed two-component systems is a system that mixes two flows of fluids with the same viscosity and density at a 1:1 ratio. As one moves away from this ideal system, mixing becomes more and more difficult.

Mixing is further complicated when the components chemically react. Mixing of all the components needs to be essentially complete before the reaction of the materials begins at significant rates.

Generally in urethane curing systems, it is desirable to increase the reactivity of any given system because higher reactivity systems cure more quickly and more parts can be produced per unit time and/or less molds are required. Higher reactivity means the 'open time' is reduced which further increases the demands on the mixing process such that complete mixing needs to occur in the mix head in very short time spans. The residence time of the components in the mix head needs to be quite low, in the order of seconds.

There exist different types of mixers that are used in numerous applications in the industry. They are impingement mixers, dynamic mixers, static mixers and Oakes-type mixers. Each of these mixers have their advantages for their own purposes, but none of them are configured to provide dynamic mixing of two materials of different viscosities under high pressure within a short residence time needed for reactive two-component systems.

Impingement mixers are well known and have a long history of successful applications in many industries. In the urethane industry, this type of machine was first developed many years ago and are now available from a variety of companies. These mixers achieve effective mixing by injection two opposing pressurized components into a small chamber. Mixing is accomplished by the impact of the opposing flows on each other. The mix head has no moving parts. Pressures need to be significant and typically exceed 6.9 MPa (1000 psi). A Hennecke brand machine is typically run at pressures around 13.8 MPa (2000 psi).

Limits of this technology are the requirement that the streams need to be about of the same order of magnitude in terms of their flow, viscosity and density, because otherwise one stream overwhelms the other -- resulting in insufficient mixing. Another disadvantage is that the flow rates can not be varied very much for a given mix head because the speed of the materials entering the mixing chamber is crucial to the mixing action.

Dynamic rotary mixers are Archimedian screws are used to push and pump in applications ranging from augers to hydraulic pumps. This pumping or pushing action removes mixed material quickly from chamber, shearing and pushing.

Disadvantages of dynamic rotary mixers are the flushing steps required, large size of the dispense head, and weight caused by electric driven mix heads.

Static mixers are simple and have no moving parts. They can effectively mix fluids in many applications

Disadvantages of static mixers that the number of mixing elements need to be increased substantially to mix fluids of diverging viscosities for ratios that are higher than 3 to 1. This increases the hold-up volume and makes the mixers unsuitable for reactive systems. Secondly, this type of mixer is only suitable for continuous operation and not for intermittent operation since the mixer needs to be flushed to prevent set-up between production runs. In some industries where the mixing demands are low, these type of mixers are disposable and are replaced after each production run.

Oakes mixers have the disadvantage that the hold up volume (too much dwell time and volume) within the mixers is high which makes them unsuitable to process a highly reactive materials. There are not suitable for intermittent operation since flushing between production runs generates waste and is generally not practical.

There are many products that are exposed to cost pressures resulting in the desire to reduce the cost of the materials. One way to reduce cost is to use inexpensive fillers. There are many of types of fillers that are being used in various chemistries across many industries.

One of the least expensive filler is crushed calcium carbonate used in numerous products and industries. When bought in bulk quantities calcium carbonate can be acquired at around 6 unts/kg (3 cents/lb) at the present time of this invention. When compared to petroleum derived polymer chemicals that typically cost more than $2.2/kg ($1.00/lb), it is apparent that use of filler can significantly reduce the cost of the system.

The addition of filler obviously results in increased demands on the mixing device. Firstly, adding filler to one component increases the viscosity of this particular component exponentially. Secondly, the ratio between the components is shifted to greater disparity since the filler is most cases inert and does not participate in the chemical reaction. Thirdly, the density is of the filled component is often increased further increasing the discrepancy between the components. Also close tolerances on impingement type mixers wear quickly.

For chemicals used in reactive components, relative densities typically range from 0.8 to 1.3. Fillers may have a range of densities, however, since there often derived from mineral deposits densities are often significantly higher than 1. For example calcium carbonate has a relative density of 2.7. Aluminum trihydrate which is also a commonly used filler because of its fire retardant properties has a relative density of 2.6.

It is instructive to consider an example to illustrate the challenges that are created for the mixing process with the addition of filler.

Consider a highly reactive system composed of component A and B that is unfilled and is processed at a ratio of 1:1. Assume that component A and component B system have both a viscosity of 1000 cps and a relative density of 1. Also, because of the high reactivity, the components need to be mixed in 2 seconds, i.e. the residence time of the mix in the mix head can be no more than 2 seconds. Assume further that the recipe calls for adding 3 parts of filler with a relative density of 2.7 to 1 part of Component B.

To illustrate the cost benefits of addition of filler, assume the cost of components A and B to be $ 2.2/kg ($1/lb) and the filler cost to be 6 cents/kg (3 cents/lb). In this example, the addition of filler reduced the system cost from $ 2.2/kg ($1/lb) to $ 0.93/kg ($0.42/lb).

To decrease the degree of difficulty of the mixing process one could add filler to both components. This increases the complexity of the blending process and in many chemistries, the filler is not compatible with one of the components. For example, in urethane chemistry, calcium carbonate is not compatible with isocyanate, because residual water on the filler surface will react with the isocyanate.

The addition of filler increases the degree of difficulty of the mixing process in three distinct ways. First, addition of 3 parts of filler to component B raises the viscosity of the B component exponentially. For example, a 3:1 ratio used in our example could easily raise the viscosity from 1,000 cps to 100,000 cps. Second, using filler has moved the weight ratio between component A and B from 1:1 to 1:4. Third, the relative density of the filled Component B has increased from 1 to 2.28. Clearly, using a filler has greatly increased demands on the mixing process and there are no machines available, until the apparatus of the present invention, that can process the above described filled reactive system.

The apparatus according to this invention allows to process 2 or more component systems that have extreme differences in their viscosity of at least 2 orders of magnitude. Additionally, an apparatus according this invention can mix components that are disparate in their relative flow rates as well as their density. Additionally, the apparatus described here is highly flexible and can process conventional unfilled systems as well as highly filled systems. Remarkable effective mixing can be accomplished at very short residence times which makes this device especially suitable for highly reactive systems.

The invention is further explained by the following examples.

Example 1

A reactive two-component polyurethane system was mixed using a machine according to this invention provided by Polymer Processing Company and made from two components.

Component A: diphenylmethane diisocyanate (MDI) prepolymer with a free NCO content of about 28%. The color was transparent with a yellow tint.

| | | |
|---|---|---|
| Component B: Polyether polyols | | 99.3 |
| | Surfactants | 5 |
| | Catalysts | 2 |
| | Various liquid additives | 2.9 |
| | Calcium carbonate | 150 |
| | Various solid additives | 27 |
| | Total Parts by Weight | 286.2 |

Component A and Component B were fed at a weight ratio of 1 to 5.3. The viscosities of Component A and Component B were 140 cps and 430,000 cps at ambient temperature, respectively. Accordingly, the viscosity ratio between component A and B was 1 to 3071. The mix head was attached to a boom that allowed the application of a puddle of material across a six foot wide substrate. The material exiting the mixer was homogenous. In particular, no streaking between the black component B and the transparent yellowish component A was observable. The substrate was moved by a belted conveyor at about 3.04 m/min (10 ft/min). The reactive urethane mixture was gauged by a fixed doctor bar at different levels ranging between 2 to 10mm. After the doctor bar, the coated substrate entered a 12.2 m (40 ft) long oven set at about 140°C. Upon exiting the mixture was fully cured into flexible sheet good suitable for applications such as footwear insoles and carpet cushion.

Example 2

Another reactive two-component polyurethane system was mixed using a machine built by Polymer Processing Company according to this invention. Component A and Component B were fed at a weight ratio of 1 to 8.12. The total output was 1.7 kg/min (3.74 lbs/min) with a residence time in the mix head of 5.67 seconds. The composition of A was the same as in Example 1. The composition of component B is listed below. The viscosities of Component A and Component B were 140 cps and 192,000 cps, respectively at 25°C (77F). Component B was processed at a temperature of 57°C (135F) at which the viscosity was measured to be about 80,000 cps. Accordingly, the viscosity ratio between component A and B was 1 to 1571. After exiting the mixer the mixed material was poured in 1- quart cup and the material fully cured within 3 minutes at room temperature producing a flexible foam. The foam was cut revealing a uniform structure of fine cells. The filler content of the precoat polyurethane compound was 65%.

| Component B (parts by weight): | |
|---|---|
| polyether polyol | 100 |
| other liquid additives | 5 |
| catalysts and surfactants | 3 |
| calcium carbonate | 300 |

Example 3

A reactive two-component polyurethane system was mixed using a machine built by Polymer Processing Company according to this invention. Component A and Component B, identified below were fed at a weight ratio of 1 to 2.02 at a combined rate of 115 kg/min (25.3 lbs/minute) resulting in a residence time in the mixhead of 0.73 seconds. The viscosities of Component A and Component B were 250 cps and 11,250 cps, respectively. Accordingly, the viscosity ratio between component A and B was 1 to 45. After exiting the mix head, the mix was poured into an open ceiling-medallion mold made of silicone. After pouring, the mold was covered with a lid and placed into a press. After curing for 15 minutes at room temperature the cured rigid foam part was removed. The part made in such manner is suitable to be used as architectural trim.

### Component A: diphenylmethane diisocyanate (MDI)

| Component B (parts by weight): | |
|---|---|
| polyether polyols | 31 |
| catalysts and surfactants | 1.46 |
| water | 0.55 |
| calcium carbonate | 66.84 |

The invention is not limited to the above embodiments. The claims follow.

## Claims

1. A mixing apparatus, comprising:
a mixing head (80) having a hydraulic motor (82) and a substantially cylindrical mixer (42) having helical mixing elements (44) extending therefrom, wherein the substantially cylindrical mixer (42) is configured to rotate under power from the hydraulic motor (82) within a mixing chamber (32) to mix and propel fluids of two different viscosities through the mixing chamber (32), wherein the mixing head (80) further comprises a shaft (84) connecting the hydraulic motor (82) and the mixer (42) and two bearings (88, 90) anchored in different planes on a frame (86) to stabilize rotation of the shaft (84), **characterized in that** one bearing (90) is anchored to a portion of the frame (86) that is in a plane transverse to the axis of the shaft (84) and the two bearings (88, 90) are arranged on the frame (86) such that their respective anchorage is arranged in an orthogonal relationship.

2. The mixing apparatus of claim 1, wherein the mixing head (80) is non-electrical and portable.

3. The mixing apparatus of claim 1, wherein the mixer (42) is configured to rotate at from about 200 revolutions per minute to about 5000 revolutions per minute.

4. The mixing apparatus of claim 1, wherein the mixing apparatus is designed to operate at a pressure ranging from about 3.4 to about 13.8 MPa (500 to about 2000 pounds per square inch).

5. The mixing apparatus of claim 1, wherein the cylindrical mixer (42) is configured to propel fluids at an output from the mixing apparatus ranging from about 4.5 kg per minute to about 22.7 kg per minute (10 pounds per minute to about 50 pounds per minute).

6. A method of using a mixing apparatus, comprising the steps of:
(a) powering a dynamic helical mixer (42) in a chamber (32) via a shaft connected to a hydraulic motor (82);
(b) delivering t wo fluids of different viscosities into the chamber (32); and
(c) mixing the two fluids using the dynamic helical mixer (42),
wherein the apparatus further comprises two bearings (88, 90) anchored in different planes on a frame (86) to stabilize rotation of the shaft (84), **characterised in that** one bearing (90) is anchored to a portion of the frame (86) that is in a plane transverse to the axis of the shaft (84) and the two bearings (88, 90) are arranged on the frame (86) such that their respective anchorage is arranged in an orthogonal relationship.

7. The method of claim 6, wherein the viscosity of the second material is at least twice the viscosity of the first material.

8. A method of making a composite from two or more fluids having different viscosities, comprising the steps of:
(a) powering a dynamic helical mixer (42) in a chamber via a shaft (84) connected to a hydraulic motor (82);
(b) delivering the two or more fluids of different viscosities into the chamber (32); and
(c) mixing the two or more fluids using the dynamic helical mixer (42) at a high shear rate,
wherein the shaft (84) rotates within two bearings (88, 90) anchored in different planes on a frame (86) to stabilize rotation of the shaft (84), **characterised in that** one bearing (90) is anchored to a portion of the frame (86) that is in a plane transverse to the axis of the shaft (84) and the two bearings (88, 90) are arranged on the frame (86) such that their respective anchorage is arranged in an orthogonal relationship.

9. The method of claim 8, wherein the viscosity of the second material is at least twice the viscosity of the first material.

## Patentansprüche

1. Mischvorrichtung, umfassend:
einen Mischkopf (80) mit einem hydraulischen Motor (82) und einem im Wesentlichen zylindrischen Mischer (42) mit davon wegragenden helikalen Mischelementen (44), wobei der im Wesentlichen zylindrische Mixer (42) ausgelegt ist, unter Strom von dem hydraulischen Motor (82) innerhalb einer Mischkammer (32) Fluide zweier verschiedener Viskositäten zu mischen und
durch die Mischkammer (32) vorwärtszutreiben, wobei der Mischkopf (80) weiterhin einen Schaft (84) umfasst, der den hydraulischen Motor (82) und den Mischer (42) und zwei Führungen (88, 90), die in verschiedenen Ebenen auf einem Rahmen (86) befestigt sind, um die Rotation des Schaftes (84) zu stabilisieren, verbindet, **dadurch gekennzeichnet, dass** an einem Teil des Rahmens (86) eine Führung (90) befestigt ist, die sich in einer Ebene transversal zu der Achse des Schaftes (84) befindet und die zwei Führungen (88, 90) so auf dem Rahmen (86) angeordnet sind, dass ihre jeweiligen Befestigungen in einer orthogonalen Beziehung zueinander stehen.

2. Mischvorrichtung nach Anspruch 1, wobei der Mischkopf (80) unelektrisch und tragbar ist.

3. Mischvorrichtung nach Anspruch 1, wobei der Mischer (42) ausgelegt ist, mit ungefähr 200 Umdrehungen pro Minute bis ungefähr 5000 Umdrehungen pro Minute zu rotieren.

4. Mischvorrichtung nach Anspruch 1, wobei die Mischvorrichtung ausgelegt ist, bei einem Druck von ungefähr 3,4 bis ungefähr 13,8 MPa (ungefähr 500 bis ungefähr 2000 Pfund pro Quadratinch) zu arbeiten.

5. Mischvorrichtung nach Anspruch 1, wobei der zylindrische Mischer (42) ausgelegt ist, Fluide bei einem Output der Mischvorrichtung von ungefähr 4,5 Kilogramm pro Minute bis ungefähr 22,7 Kilogramm pro Minute (10 Pfund pro Minute bis ungefähr 50 Pfund pro Minute) vorwärtszutreiben.

6. Verfahren zur Verwendung einer Mischvorrichtung, umfassend die Schritte:
(a) Antreiben eines dynamischen helikalen Mischers (42) in einer Kammer (32) über einen an einem hydraulischen Motor (82) befestigten Schaft;
(b) Einleiten zweier Fluide mit verschiedenen Viskositäten in die Kammer (32); und
(c) Mischen der beiden Fluide mit dem dynamischen helikalen Mischer (42), wobei die Vorrichtung weiterhin zwei Führungen (88, 90) umfasst, die in verschiedenen Ebenen auf einem Rahmen (86) befestigt sind, um die Rotation des Schaftes (84) zu stabilisieren, **dadurch gekennzeichnet, dass** an einem Teil des Rahmens (86) eine Führung (90) befestigt ist, die sich in einer Ebene transversal zu der Achse des Schaftes (84) befindet und die zwei Führungen (88, 90) so auf dem Rahmen (86) angeordnet sind, dass ihre jeweiligen Befestigungen in einer orthogonalen Beziehung zueinander stehen.

7. Verfahren nach Anspruch 6, wobei die Viskosität des zweiten Materials wenigstens der zweifachen Viskosität des ersten Materials entspricht.

8. Verfahren zur Herstellung eines Gemischs aus zwei oder mehr Fluiden mit verschiedenen Viskositäten, umfassend die Schritte:
(a) Antreiben eines dynamischen helikalen Mischers (42) in einer Kammer über einen an einem hydraulischen Motor (82) befestigten Schaft (84);
(b) Einleiten zweier Fluide mit verschiedenen Viskositäten in die Kammer (32); und
(c) Mischen der beiden Fluide mit dem dynamischen helikalen Mischer (42) bei einer hohen Schergeschwindigkeit,
wobei der Schaft (84) innerhalb zweier Führungen (88, 90) rotiert, die in verschiedenen Ebenen auf einem Rahmen (86) befestigt sind, um die Rotation des Schaftes zu stabilisieren, **dadurch gekennzeichnet, dass** an einem Teil des Rahmens (86) eine Führung (90) befestigt ist, die sich in einer Ebene transversal zu der Achse des Schaftes (84) befindet und die zwei Führungen (88, 90) so auf dem Rahmen (86) angeordnet sind, dass ihre jeweiligen Befestigungen in einer orthogonalen Beziehung zueinander stehen.

9. Verfahren nach Anspruch 8, wobei die Viskosität des zweiten Materials wenigstens der zweifachen Viskosität des ersten Materials entspricht.

## Revendications

1. Appareil de mélange, comprenant :
une tête de mélange (80) dotée d'un moteur hydraulique (82) et d'un mélangeur sensiblement cylindrique (42) ayant des éléments de mélange hélicoïdaux (44) s'étendant à partir de là, dans lequel le mélangeur sensiblement cylindrique (42) est configuré pour tourner lorsqu'il est alimenté par le moteur hydraulique (82) dans une chambre de mélange (32), afin de mélanger et de propulser des fluides de deux viscosités différentes à travers la chambre de mélange (32), dans lequel la tête de mélange (80) comprend en outre un arbre (84) reliant le moteur hydraulique (82) et le mélangeur (42) et deux paliers (88, 90) fixés dans deux plans sur un cadre (86) pour stabiliser la rotation de l'arbre (84), **caractérisé en ce qu'**un palier (90) est fixé à une partie du cadre (86) qui est dans un plan transversal à l'axe de l'arbre (84) et les deux paliers (88, 90) sont disposés sur le cadre (86) de sorte que leur fixation respective soit disposée selon une relation perpendiculaire.

2. Appareil de mélange selon la revendication 1, dans lequel la tête de mélange (80) est non-électrique et portable.

3. Appareil de mélange selon la revendication 1, dans lequel le mélangeur (42) est configuré pour tourner d'environ 200 tours par minute à environ 5 000 tours par minute.

4. Appareil de mélange selon la revendication 1, dans lequel l'appareil de mélange est conçu pour fonctionner à une pression comprise entre environ 3,4 et environ 13,8 MPa (500 à environ 2 000 livres par pouce carré).

5. Appareil de mélange selon la revendication 1, dans lequel le mélangeur cylindrique (42) est configuré pour propulser des fluides, à un débit de l'appareil de mélange compris entre environ 4,5 kg par minute et environ 22,7 kg par minute (10 livres par minute à environ 50 livres par minute).

6. Procédé d'utilisation d'un appareil de mélange, comprenant les étapes consistant à :
(a) alimenter un mélangeur hélicoïdal dynamique (42) dans une chambre (32) par le biais d'un arbre raccordé à un moteur hydraulique (82) ;
(b) fournir les deux fluides ou plus de différentes viscosités dans la chambre (32) ; et
(c) mélanger les deux fluides en utilisant le mélangeur hélicoïdal dynamique (42),
dans lequel l'appareil comprend en outre deux paliers (88, 90) fixés dans différents plans sur un cadre (86) pour stabiliser la rotation de l'arbre (84), **caractérisé en ce qu'**un palier (90) est fixé à une partie du cadre (86) qui est dans un plan transversal à l'axe de l'arbre (84) et les deux paliers (88, 90) sont disposés sur le cadre (86), de sorte que leur fixation respective soit disposée selon une relation perpendiculaire.

7. Procédé selon la revendication 6, dans lequel la viscosité du second matériau est au moins égale à deux fois la viscosité du premier matériau.

8. Procédé de réalisation d'un matériau composite à partir de deux fluides ou plus ayant des viscosités différentes comprenant les étapes consistant à :
(a) alimenter un mélangeur hélicoïdal dynamique (42) dans une chambre via un arbre (84) raccordé à un moteur hydraulique (82) ;
(b) fournir les deux fluides ou plus de différentes viscosités dans la chambre (32) ; et
(c) mélanger les deux fluides ou plus en utilisant le mélangeur hélicoïdal dynamique (42) à un taux de cisaillement élevé,
dans lequel l'arbre (84) tourne dans deux paliers (88, 90) fixés dans différents plans sur un cadre (86), afin de stabiliser la rotation de l'arbre (84), **caractérisé en ce qu'**un palier (90) est fixé à une partie du cadre (86), qui est dans un plan transversal à l'axe de l'arbre (84) et les deux paliers (88, 90) sont disposés sur le cadre (86), de sorte que leur fixation respective soit disposée selon une relation perpendiculaire.

9. Procédé selon la revendication 8, dans lequel la viscosité du second matériau est au moins deux fois la viscosité du premier matériau.
